**Europäisches Patentamt**

**European Patent Office**

**Office européen des brevets**

(19)

(11) Veröffentlichungsnummer: **0 085 936**

**A1**

(12) # EUROPÄISCHE PATENTANMELDUNG

(21) Anmeldenummer: **83100968.3**

(22) Anmeldetag: **02.02.83**

(51) Int. Cl.³: **H 04 L 17/00**

(30) Priorität: **08.02.82 CH 746/82**

(43) Veröffentlichungstag der Anmeldung:
**17.08.83 Patentblatt 83/33**

(84) Benannte Vertragsstaaten:
**CH DE GB LI SE**

(71) Anmelder: **Hasler AG**
**Belpstrasse 23**
**CH-3000 Bern 14(CH)**

(72) Erfinder: **Marbet, Hans**
**Thujaweg 77**
**CH-3322 Mattstetten(CH)**

(74) Vertreter: **Schwerdtel, Eberhard, Dr.**
**c/o Hasler AG Belpstrasse 23**
**CH-3000 Bern 14(CH)**

(54) **Vorrichtung zur Erweiterung der Anzahl verschiedenartiger, fernübertragbarer Zeichen für Fernschreibmaschinen.**

(57) Die Vorrichtung ist vorgesehen für Fernschreibmaschinen, die mittels des Internationalen Telegraphen-Alphabets ITA Nr. 2 miteinander verkehren. Sende- und Empfangsteil sind ausgerüstet zur Eingabe bzw. zum Ausdrucken von Zeichen von wenigstens drei Zeichensätzen (15, 17, 19) (Ziffern/Zeichen, Grossbuchstaben, Kleinbuchstaben, usw.), wobei jedem Codewort (Fünfschrittgruppe) des Telegraphen-Alphabets je ein Zeichen dieser Zeichensätze (15, 17, 19) zugeordnet ist.

Beim Wechsel von einem Zeichensatz (15, 17, 19) zu einem anderen wird auf die Uebertragungsleitung jeweils ein Umschalt-Befehlswort (35, 36, 37, 38) ausgesendet. Diese Befehlswörter sind gebildet einzeln (35, 36) und als Folge (37, 38) aus wenigstens zwei der im Telegraphen-Alphabet vorgesehenen Umschalt-Codewörter (30, 31).

Fig. 2

EP 0 085 936 A1

0085936
Fall 624

Vorrichtung zur Erweiterung der Anzahl verschiedenartiger, fernübertragbarer Zeichen für Fernschreibmaschinen

Die Erfindung betrifft eine Vorrichtung zur Erweiterung der Anzahl verschiedenartiger, fernübertragbarer Zeichen für Fernschreibmaschinen, die ausgerüstet sind zur Fernübertragung von Zeichen zweier Zeichensätze, wobei den Zeichen der beiden Zeichensätze für die Fernübertragung ein einziger, gemeinsamer Satz von Codewörtern zugeordnet ist, insbesondere das Internationale Telegraphen-Alphabet ITA Nr. 2, wobei beim Wechseln von einem der Zeichensätze zum anderen jeweils ein erstes Umschalt-Codewort und beim umgekehrten Uebergang jeweils ein zweites Umschalt-Codewort fernübertragen wird, und wobei der Sendeteil jeder Fernschreibmaschine ausgerüstet ist mit Mitteln zur Eingabe der fernzuübertragenden Zeichen, insbesondere mit Eingabetasten und der Empfangsteil jeder Fernschreibmaschine mit einer Druck- oder Anzeigeeinrichtung zum Sichtbarmachen der fernübertragenen Zeichen.

Zur Verwendung auf internationalen Telegraphenleitungen ist von der internationalen Normungsstelle CCITT das Internationale Telegraphen-Alphabet ITA Nr. 2 eingeführt. Dieses verwendet zur Uebertragung Zeichenrahmen, die aus einem Anlaufschritt, einer Fünfschrittgruppe und einem Sperrschritt bestehen. Mit Hilfe der fünf Schritte der Fünfschrittgruppe

-/-

lassen sich 32 verschiedene Kombinationen bilden, die einen
Satz einer entsprechenden Anzahl von Codewörtern darstellen.

Diesem Satz von Codewörtern ist zum einen das Alphabet, d.h.
ein Satz von Buchstaben (auch Buchstabenreihe genannt) und
zum anderen ein Satz von Ziffern und Zeichen (auch Zeichenreihe genannt) zugeordnet. Beim Uebergang vom Buchstaben-
Satz auf den Ziffern/Zeichen-Satz wird eines der Codewörter
als Zeichen-Umschalt-Codewort und beim umgekehrten Uebergang
entsprechend ein Buchstaben-Umschalt-Codewort verwendet.
Diese letzteren Codewörter sind redundant, d.h. ihre wiederholte Aussendung bleibt ohne Wirkung beim Empfänger.

Fernschreibmaschinen, die das Internationale Telegraphen-
Alphabet ITA $\overset{Nr.2}{\text{Nr.2}}$ verwenden, weisen zur Texteingabe entweder
einen Satz von Eingabetasten auf, bei dem jede Taste zum
einen dem Ziffern/Zeichen-Satz und zum andern dem Buchstaben-Satz zugeordnet ist, wobei der Uebergang vom einen
Satz zum anderen Satz jeweils durch Betätigen einer Umschalttaste erfolgt, wodurch auf die Uebertragungsleitung
das entsprechende Umschalt-Codewort ausgesendet wird. Oder
sie besitzen eine sogenannte Volltastatur, bei der sowohl
für den Buchstaben- als auch für den Ziffern/Zeichen-Satz ein
vollständiger Satz von Eingabetasten vorhanden ist. Bei
derartigen Volltastaturen erfolgt beim Uebergang vom einen
Satz zum anderen automatisch die Aussendung des entsprechenden Umschalt-Codewortes auf die Uebertragungsleitung.

-/-

Es ist weiter bekannt, Fernschreibmaschinen mit Druckeinrichtungen auszurüsten, z.B. mit Nadeldruckern, die einen Text wahlweise in Gross- oder in Kleinbuchstaben ausdrucken. Welcher Buchstaben-Satz verwendet wird, hängt vom Typ der jeweiligen Empfangs-Fernschreibmaschine ab.

Bei Benutzung normaler Büro-Schreibmaschinen ist es üblich, Texte grammatikalisch richtig mit Gross- und Kleinbuchstaben zu schreiben, wobei der Wechsel von der einen Buchstabensorte zur anderen durch Betätigung einer Umschalttaste ausgelöst wird. Beim Fernschreiben besteht daher ebenfalls der Wunsch, die Gross- und Kleinschreibung zu ermöglichen. Diesem Wunsch steht jedoch das genannte Telegraphen-Alphabet ITA Nr.2 entgegen, da dieses die Gross- und Kleinschreibung nicht vorsieht und da bei diesem sämtliche Fünfschrittgruppen bzw. Codewörter vergeben sind, so dass zusätzliche Umschaltzeichen nicht verfügbar sind. Die Aufgabe der Erfindung besteht nun darin, eine Vorrichtung zur Erweiterung der Anzahl verschiedenartiger fernübertragbarer Zeichen für solche Fernschreibmaschinen anzugeben, die mittels des Internationalen TelegraphenAlphabets ITA Nr. 2 bzw. eines entsprechenden Alphabets miteinander verkehren. Die hierdurch zusätzlich übertragbarer Zeichen sollen vor allem die Gross- und Kleinschreibung und damit ein Schriftbild ermöglichen, das demjenigen üblicher Schreibmaschinen weitgehend entspricht. Die Lösung dieser Aufgabe ist durch eine Vorrichtung entsprechend dem kennzeichnenden Teil von Anspruch 1 gekennzeichnet. Die anderen Ansprüche kennzeichnen zwei Ausführungsbeispiele.

Der Vorteil der Vorrichtung besteht vor allem darin, dass mit ihr ausgerüstete Fernschreibmaschinen voll kompatibel sind mit den bestehenden Telex- und Telegraphennetzen und mit sämtlichen an diese Netze angeschlossenen Fernschreibmaschinen. Diese Fernschreibmaschinen eignen sich damit zum Verkehr mit herkömmlichen Fernschreibmaschinen im bekannten Rahmen. Beim Verkehr zwischen zwei Fernschreibmaschinen, die beide mit der Vorrichtung ausgerüstet sind, ermöglicht diese zusätzlich beliebige Gross- und Kleinschreibung.

Im folgenden wird die Erfindung anhand von vier Figuren beispielsweise näher beschrieben. Es zeigen:

Fig. 1 Auszugsweise Tabelle des Internationalen Telegraphen-Alphabets

-/-

Fig. 2  Tabelle eines ersten Satzes von Befehlswörtern

Fig. 3  Tabelle eines zweiten Satzes von Befehlswörtern

Fig. 4  Blockschaltbild einer Fernschreibmaschine.

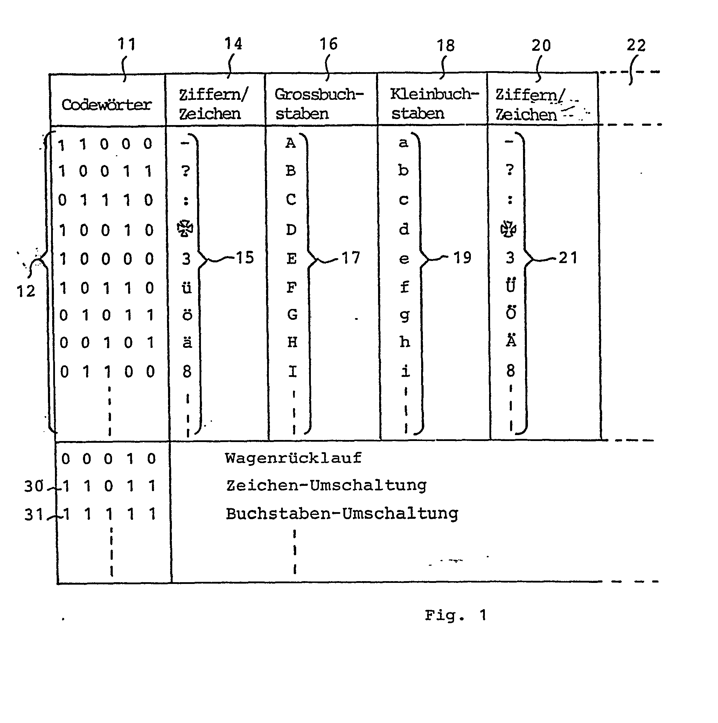

Fig. 1 zeigt in einer Tabelle ausschnittweise das Internationale Telegraphen-Alphabet ITA Nr. 2. In der ersten Spalte sind die verwendbaren.Fünfschrittgruppen bzw. Codewörter 12 aufgelistet. In der zweiten Spalte 14 sind die den Codewörtern 12 zugeordneten Ziffern/Zeichen und drei Umlaute in Kleinbuchstaben aufgelistet, die einen ersten Zeichensatz 15 bilden. In der dritten Spalte 16 sind die zugeordneten Buchstaben bzw. das Alphabet in Grossschreibung aufgelistet, die einen zweiten Zeichensatz 17 bilden. In der vierten Spalte 18 ist das gleiche Alphabet in Kleinschreibung enthalten (dritter Zeichensatz 19). In der fünften Spalte 20 ist nochmals der Ziffern/Zeichen-Satz von Spalte 14 enthalten, wobei jedoch die Umlaute in Grossbuchstaben erscheinen (vierter Zeichensatz 21). Weitere Zeichen und Buchstaben, z.B. die griechischen oder die lateinischen in Kursivschreibweise, können mittels eines weiteren Zeichensatzes in einer fünften Spalte 22 vorgesehen sein, desgleichen zusätzliche Sätze in zusätzlichen Spalten.

-/-

**0085936**

Fall 624

Die Zuordnung zwischen den einzelnen Codewörtern 12 und
den einzelnen Ziffern/Zeichen, Buchstaben usw. der Zeichensätze 15, 17, 19, 21 usw. sind zeilenweise ablesbar. Im
unteren Teil der Tabelle sind sonstige Codewörter angegeben, insbesondere die Codewörter 30 und 31, von denen
das Codewort (30) das Zeichen-Umschalt-Codewort (figure
shift) ist und das Codewort (31) das Buchstaben-Umschalt-
Codewort (letter shift).

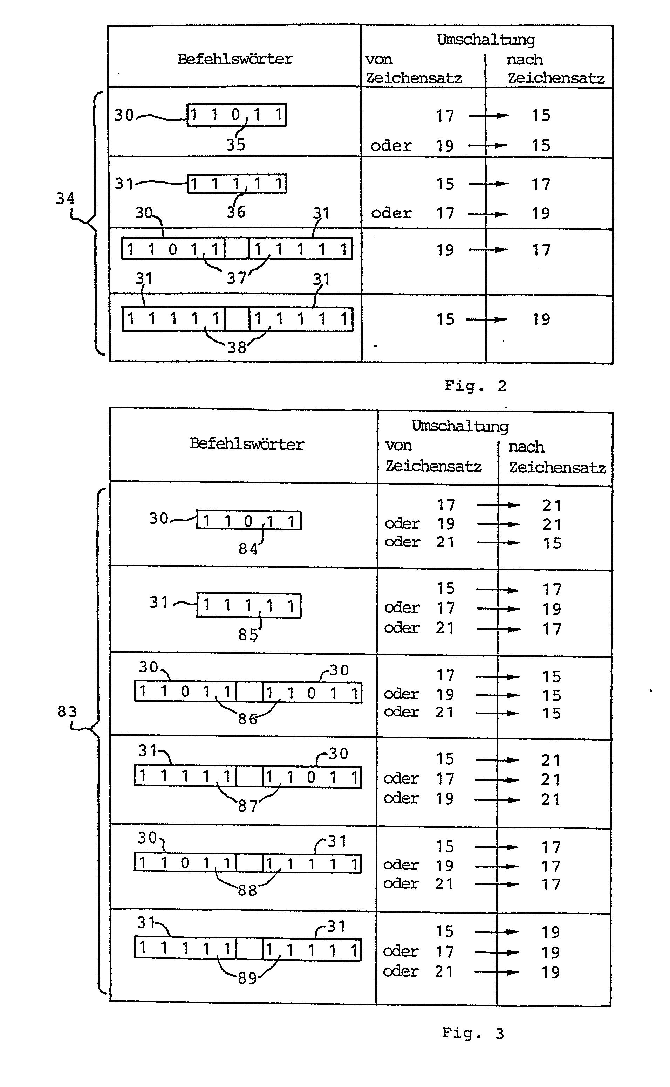

Fig. 2 zeigt in Form einer weiteren Tabelle einen Satz 34
von insgesamt vier Befehlswörtern 35 bis 38, mittels derer
eine beliebige Umschaltung zwischen den in Fig. 1 gezeigten
Zeichensätzen 15, 17 und 19 auslösbar ist. Als Befehlswort
35 dient einzeln das Codewort 30 für entweder die Umschaltung von Grossbuchstaben nach Ziffern/Zeichen oder von
Kleinbuchstaben nach Ziffern/Zeichen. Das Codewort 31 einzeln dient als Befehlswort 36 für entweder die Umschaltung
von Ziffern/Zeichen nach Grossbuchstaben oder von Grossbuchstaben nach Kleinbuchstaben. Die weiteren Befehlswörter 37 und 38 sind serielle Kombinationen bzw. zeitliche Folgen von je zwei der Umschalt-Codewörter 30 und 31.
Das Befehlswort 37 als Folge der Codewörter 30 und 31 dient
zur Umschaltung von Kleinbuchstaben nach Grossbuchstaben

-/-

und das Befehlswort 38 als Folge von zwei Codewörtern 31 zur Umschaltung von Ziffern/Zeichen nach Kleinbuchstaben.

Fig. 3 zeigt ebenfalls in Form einer Tabelle einen weiteren Satz 83 von insgesamt sechs Befehlswörtern 84 bis 89, mittels derer eine beliebige Umschaltung zwischen den in Fig. 1 gezeigten Zeichensätzen 15, 17, 19 und 21 auslösbar ist. Als Befehlswörter 84 bis 89 dienen wiederum die beiden Umschalt-Codewörter 30 und 31 einzeln sowie die vier unterscheidbaren Folgen von jeweils zwei dieser Umschalt-Codewörter, wobei die durch diese Befehlswörter ausgelösten Umschaltungen der Tabelle zu entnehmen sind.

Der Befehlswort-Satz 34 nach Fig. 2 ermöglicht Gross- und Kleinschreibung der Buchstaben des Normal-Alphabetes, der Befehlswort-Satz 83 nach Fig. 3 darüber hinaus die Gross-und Kleinschreibung von Umlauten. Die Erweiterung von

Fig. 1 um zusätzliche Spalten 22 ermöglicht bei Verwendung von Befehlswörtern aus Folgen von drei und mehr Umschalt-Codewörtern 30 und 31 die Fernübertragung auch der Zeichen

dieser Spalten 22.

-/-

0085936
Fall 624

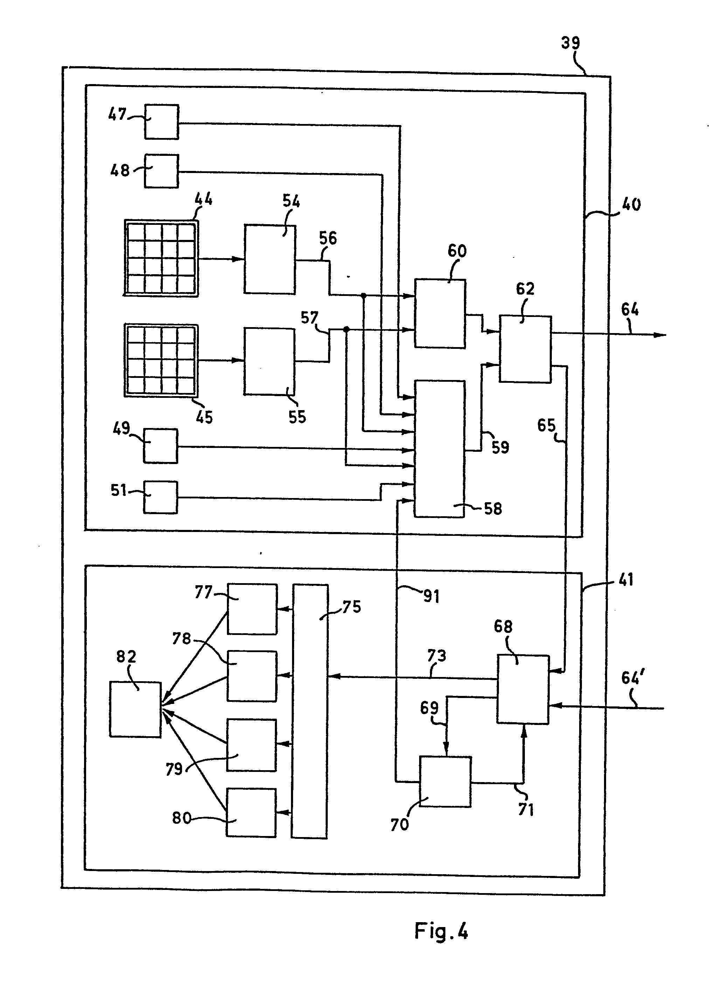

Fig. 4 zeigt das Blockschaltbild einer Fernschreibmaschine 39 mit einem Sendeteil 40 und einem Empfangsteil 41. Die Maschine 39 ist über eine Sendeleitung 64 und eine Empfangsleitung 64' mit dem Telexnetz und über dieses mit einer zweiten, nicht gezeigten Fernschreibmaschine so gekoppelt, dass der Sendeteil 40 mit dem Empfangsteil und der Empfangsteil 41 mit dem Sendeteil dieser nicht gezeigten Fernschreibmaschine zusammenarbeitet. Die Uebertragungsnorm der Leitungen 64, 64' entspricht den Vorschriften für das internationale Telegraphen-Alphabet Nr.2 Der Sendeteil 40 ist weiter mit dem Empfangsteil 41 über zwei Leitungen 65 und 91 verbunden.

Der Sendeteil 40 umfasst einen ersten Satz von Tasten 44 zur Eingabe von Ziffern/Zeichen und einen zweiten Satz von Tasten 45 zur Eingabe von Buchstaben. 47 und 48 sind Einzeltasten zur Eingabe der Zeichen-Umschaltung bzw. Buchstaben-Umschaltung. Diese Tasten sind bei einer Volltastatur, wie sie die Kombination der Tasten-Sätze 44 und 45 darstellt, nur zur Initialisierung der Fernschreibmaschinen notwendig. 49 ist eine weitere Einzeltaste, durch deren Betätigung der Wechsel von Grossbuchstaben nach Kleinbuchstaben und umgekehrt ausgelöst wird. Diese Taste 49 kann, wie es für normale Büro-Schreibmaschinen bekannt ist, zur

-/-

Bedienungsvereinfachung zweimal vorhanden sein. 51 ist eine weitere Umschalttaste, mittels der ein weiterer Zeichensatz 21 anwählbar ist, beispielsweise ein zweiter Ziffern/Zeichen-Satz oder die griechischen Buchstaben.

Die Tasten-Sätze 44 und 45 sind mit zugeordneten Codierern 54 bzw. 55 verbunden, welche für jede betätigte Taste ein (beispielsweise) 8-Bit-Codewort auf ihre Ausgänge 56 bzw. 57 abgeben. Diese 8-Bit-Codewörter enthalten als Minimal-Information Angaben darüber, welches Codewort 12 (das auf die Leitung 64 auszusenden ist) der betätigten Taste entspricht und welchem Tasten-Satz (44 oder 45) die Taste angehört. Die 8-Bit-Codewörter können darüber hinaus zusätzliche Informationen enthalten, die der Verarbeitung dieser 8-Bit-Codewörter im Sendeteil 40 dienen.

Die Ausgänge 56 und 57 der Codierer 54 bzw. 55 sind zum einen mit einer Logikeinheit 58 und zum anderen mit einem Codewandler 60 verbunden. Dieser letztere wandelt die empfangenen 8-Bit-Codewörter aufgrund der in ihnen enthaltenen Information in jeweils ein zugeordnetes (auszusendendes) Codewort 12 um und gibt diese Codewörter 12 nacheinander an einen Pufferspeicher 62 ab. Die Logikeinheit 58

-/-

ist weiter mit den Tasten 47, 48, 49 und 51 verbunden. Sie besitzt einen Speicher, aufgrund dessen stets bekannt ist, welchem Zeichensatz (15, 17, 19, 21) das letzte auf die Leitung 64 ausgesendete Codewort 12 zugeordnet ist. Ist das diesem Codewort nächstfolgende Codewort dem gleichen Zeichensatz (15, 17, 19, 21) zugeordnet, so reagiert die Logikschaltung 58 nicht. Stellt die Logikschaltung 58 jedoch einen Uebergang von dem einen Zeichensatz zu einem anderen Zeichensatz fest, beispielsweise weil die Taste 49 gedrückt wurde oder weil statt wiederholt eine der Tasten des Tasten-Satzes 44 eine solche des Satzes 45 betätigt wurde, so gibt die Einheit 58 über ihren Ausgang 59 das jeweils zur Umsteuerung der Empfangsfernschreibmaschine erforderliche Befehlswort (35 bis 38 oder 84 bis 89) an den Pufferspeicher 62 ab. Dieser sendet dieses Befehlswort dann vorgängig des vom Codewandler 60 gelieferten, dem nächsten Zeichensatz (15, 17, 19, 21) zugehörigen Codewortes 12 auf die Leitungen 64 und 65 aus.

Der Empfangsteil 41 umfasst einen Codewandler 68, der die über die Leitungen 64' oder 65 ankommenden Codewörter 12 umcodiert in 8-Bit-Codewörter, indem er den Codewörtern 12 Information über ihre Zuordnung zu einem Zeichensatz (15, 17, 19, 21) zufügt. Die Umschalt-Codewörter 30 und 31

-/-

werden vom Codewandler 68 erkannt und über seinen Ausgang 69 weitergegeben zu einem Befehlswort-Decodierer 70. Dieser decodiert die über die Umschalt-Codewörter 30, 31 empfangenen Befehlswörter 35 bis 38 oder 84 bis 89 und gibt über seinen Ausgang 71 dem Codewandler 68 Anweisung, wie die nachfolgend über die Leitungen 64' oder 65 ankommenden Codewörter 12 umzucodieren sind. Die 8-Bit-Codewörter erreichen über einen Ausgang 73 des Codewandlers 68 einen Pufferspeicher und Sortierer 75, von dem aus sie ihrer Information entsprechend einem von mehreren Zeichencodewandlern 77, 78, 79, 80 zugeführt werden. Jeder dieser Zeichencodewandler ist ausgebildet zur Erzeugung der Ziffern/Zeichen und/oder Buchstaben eines der Zeichensätze 15, 17, 18, 21, wobei beispielsweise der Wandler 77 zur Erzeugung des ersten Ziffern/Zeichen-Satzes 15, der Wandler 78 zur Erzeugung des Grossbuchstaben-Satzes 17, der Wandler 79 zur Erzeugung des Kleinbuchstaben-Satzes 19 und der Wandler 80 zur Erzeugung des zweiten Ziffern/Zeichen-Satzes 21 dient.

Alle Zeichencodewandler 77 bis 80 steuern einen gemeinsamen Druckerkopf 82 an, beispielsweise einen Nadeldrucker. Hierzu erzeugen die Wandler aufgrund des zu wandelnden

-/-

8-Bit-Codewortes jeweils eine Folge von etwa fünf Druckschritten, wobei bei jedem dieser Schritte jeweils 0 bis
beispielsweise 7 Drucknadeln erregt werden.

Die Zeichencodewandler 77 bis 80 bilden zusammen mit dem
Nadeldruck 82 eine Druckeinrichtung zum Ausdrucken der
Zeichen von insgesamt beispielsweise vier Zeichensätze
15, 17, 19, 21. Andere Druckeinrichtungen sind ebenfalls
möglich, z.B. Tintenstrahldrucker. Weiter kann die Druckeinrichtung ergänzt oder ersetzt sein durch eine Sichtanzeige, beispielsweise einen Bildschirm.

Die Fernschreibmaschine 39 arbeitet auf der Uebertragungsleitung 64, 64' ausschliesslich mit zugelassenen Codewörtern 12 des Internationalen Telegraphen-Alphabets ITA Nr.2
Die in diesem Alphabet vorgesehene Redundanz der Umschalt-
Codewörter 30 und 31 wird in der Maschine 39 teilweise aufgehoben und, wie anhand von Fig. 2 und 3 beschrieben, ausgenutzt zur Bildung von Befehlswörtern 35 bis 38 bzw. 84 bis 89.
Beim Zusammenarbeiten zweier Fernschreibmaschinen 39 ergibt
sich bei Verwendung der drei Zeichensätze 15, 17 und 19
die Möglichkeit, Ziffern/Zeichen, Grossbuchstaben und Kleinbuchstaben in jeder beliebiger Reihenfolge über die bestehenden Uebertragungsnetze fernzuübertragen. Für die Zusammenarbeit einer Fernschreibmaschine 39 mit einer nicht für Gross- und Kleinschreibung vorgesehenen Fernschreibmaschine ist volle Kompatibilität in beiden Uebertragungsrichtungen gegeben. Die Befehlswörter 35 bis 38 (entsprechend Fig. 2, sind nämlich so gebildet, dass das Befehlswort 35 übereinstimmt mit dem Umschalt-Codewort 30, und dass die anderen drei Befehlswörter 36, 37 und 38 als einziges oder als letztes Umschalt-Codewort jeweils das Codewort 31 aufweisen. Hierdurch schaltet das erste Befehlswort 35 die genannte Fernschreibmaschine auf ihren Ziffern/Zeichen-Satz und die anderen Befehlswörter 36, 37, 38 schalten diese jeweils auf ihren Buchstaben-Satz um (der entweder ausschliesslich aus Grossbuchstaben oder aus Kleinbuchstaben besteht). Hierdurch ist eine einwandfreie Textübertragung gewährleistet. Umgekehrt schaltet aufgrund eines empfangenen Umschalt-Codewortes 31 der Empfangsteil 41 in der Fernschreibmaschine 39 auf jeden Fall um auf einen seiner Buchstaben-Sätze (17 oder 19) und beim Empfang eines Umschalt-Codewortes 30 um auf den Ziffern/Zeichen-Satz 15, wodurch ebenfalls volle Text-Lesbarkeit gewährleistet wird.

**0085936**

Entsprechendes gilt bei Verwendung des Befehlswort-Satzes 83 (Fig. 3) und den Zeichensätzen 15, 17, 19 und 21. Hierbei ist zusätzlich die Gross- und Kleinschreibung von Umlauten möglich.

Die Leitung 65 dient zur maschineninternen Uebertragung aller ausgesandten Codewörter 12 und ermöglicht damit das Ausdrucken des ausgesendeten Textes über die eigene Druckeinrichtung (77 bis 80, 82).

Die Vorrichtung und die ihr zugrunde liegende Erfindung erschöpft sich nicht im Satz 34 der Befehlswörter 35 bis 38 entsprechend Fig. 2 oder demjenigen (83) der Befehlswörter 84 bis 89 von Fig. 3. Vielmehr ist es möglich, auch andere Kombinationen aus zwei oder mehr der Umschalt-Codewörter 30 und 31 auszuwählen und als Befehlswörter zu verwenden, insbesondere bei Erhöhung der Anzahl von Zeichen/Sätzen 15, 17, 19 und 21. Die Sätze 34 und 83 stellen jedoch Optima dar bezüglich Kompatibilität mit herkömmlichen Fernschreibmaschinen und hinsichtlich Kürze der Befehlswörter, was sich positiv in der für die Uebertragung der Befehlswörter benötigten Zeit äussert.

-/-

Weiter ist es möglich, eine Fernschreibmaschine 39 anzugeben, die nur einen einzigen Satz von Eingabetasten
(44 oder 45) aufweist, und bei der zur Umschaltung zwischen
den Zeichensätzen 15 und beispielsweise 17 bzw. umgekehrt
jeweils eine der Tasten 47 und 48 zu betätigen ist, oder
Fernschreibmaschinen 39, die entweder nur mit einem Sendeteil 40 oder nur mit einem Empfangsteil 41 ausgerüstet sind.

Es ist vorteilhaft, bei der Initialisierung der Fernschreibmaschine 39 zur Herstellung eines definierten Zustandes
eines der Befehlswörter, beispielsweise das Befehlswort 38,
zu erzeugen und auszusenden, das die Logikeinheiten 58 und
die Befehlswort-Decodierer 70 der an der Initialisierung
beteiligten Fernschreibmaschinen in Uebereinstimmung bringt.
Für Halbduplex-Maschinen 39, die zu einer Zeit jeweils nur
entweder senden oder empfangen können, ist ferner zur ständigen Erhaltung definierter Zustände eine Verbindung 91
vorgesehen, über die der Decodierer 70 der Logikeinheit 58
mitteilt, welchem Zeichensatz die empfangenen Zeichen
jeweils zugeordnet sind. Bei Vollduplex-Maschinen 39, die
gleichzeitig senden und empfangen können, ist diese Verbindung 91 nicht erforderlich.

Abschliessend sei bemerkt, dass es möglich ist, mit Hilfe der am Ausgang des Pufferspeichers 62 abgegebenen Codewörter 12 einen Lochstreifen zu stanzen und diesen später mittels einer beliebigen Fernschreibmaschine auf die Leitung 64 auszusenden. Hierdurch gehen die eingeschobenen Befehlswörter 35 bis 38 nicht verloren.

Patentansprüche

1. Vorrichtung zur Erweiterung der Anzahl verschiedenartiger, fernübertragbarer Zeichen für Fernschreibmaschinen (39), die ausgerüstet sind zur Fernübertragung
von Zeichen zweier Zeichensätze,

- wobei den Zeichen der beiden Zeichensätze für die
Fernübertragung ein einziger, gemeinsamer Satz von
Codewörtern (12) zugeordnet ist, insbesondere das
Internationale Telegraphen-Alphabet ITA Nr. 2,

- wobei beim Wechseln von einem der Zeichensätze zum
anderen jeweils ein erstes Umschalt-Codewort (30, 31)
und beim umgekehrten Uebergang jeweils ein zweites
Umschalt-Codewort (31, 30) fernübertragen wird,

- und wobei der Sendeteil (40) jeder Fernschreibmaschine ausgerüstet ist mit Mitteln zur Eingabe der
fernzuübertragenden Zeichen, insbesondere mit Eingabetasten (44, 45, 47, 48, 49, 51) und der Empfangsteil (41)
jeder Fernschreibmaschine mit einer Druck- oder Anzeigeeinrichtung zum Sichtbarmachen der fernübertragenen
Zeichen,

dadurch gekennzeichnet,

- dass jeder Sendeteil (40) ausgerüstet ist mit Eingabemitteln zur Eingabe der Zeichen von wenigstens drei
Zeichensätze (15, 17, 19, 21), die alle dem einzigen Satz von Codewörtern (12) zugeordnet sind,

- dass jeder Sendeteil (40) eine Logikeinheit (58) aufweist, die beim Wechseln von einem der Zeichensätze (15, 17, 19, 21) zu einem anderen ein diesem Wechsel zugeordnetes Befehlswort (35...38, 84...89) zur Fernübertragung bereitstellt, das Bestandteil ist eines

Satzes (34, 83) von Befehlswörtern (35...38, 84...89),

die wenigstens teilweise gebildet sind aus der zeitlichen Folge von wenigstens zwei Umschalt-Codewörtern (30 und/ oder 31),

- dass jeder Empfangsteil (41) ausgerüstet ist mit einer Druck- oder Anzeigeeinrichtung (77...80, 82), die ausgebildet ist zum Sichtbarmachen aller Zeichen der wenigstens drei Zeichensätze (15, 17, 19, 21),

- und dass jeder Empfangsteil (41) einen Befehlswort-Decodierer (70) aufweist, der die fernübertragenen Befehlswörter (35...38, 84...89) decodiert und der die Druck- oder Anzeigeeinrichtung (77...80, 82) anweist, die dem jeweiligen Befehlswort (35...38, 84...89) nachfolgenden, fernübertragenen Codewörter (12) als zugeordnete Zeichen desjenigen Zeichensatzes (15, 17, 19, 21) sichtbar zu machen, der durch das jeweilige Befehlswort (35...38, 84...89) ausgewählt ist.

-/-

2. Vorrichtung nach Anspruch 1,

dadurch gekennzeichnet,

- dass die Eingabemittel gebildet sind durch zwei Tasten-Sätze (44, 45) zur Eingabe der Zeichen eines Ziffern/Zeichen-Satzes (15) und eines Buchstaben-Satzes (17, 19) und durch eine Umschalttaste (49) zum jederzeitigen Umschalten von dem einen Buchstaben-Satz (17, 19) auf einen zweiten Buchstaben-Satz (19, 17),

- dass die Logikeinheit (58) ausgebildet ist zur Bereitstellung von insgesamt vier Befehlswörtern (35...38), von denen das erste (35) gebildet ist aus einem einzigen ersten Umschalt-Codewort (30), von denen das zweite (36) gebildet ist aus einem einzigen zweiten Umschalt-Codewort (31), und von denen das dritte (37) und das vierte (38) gebildet sind als Folgen von jeweils zwei Umschalt-Codewörtern (30 und/oder 31), wobei jeweils das letztere dieser Umschalt-Codewörter ein zweites Umschalt-Codewort (31) ist,

- und dass die Druck-oder Anzeigeeinrichtung (77...80, 82) ausgerüstet ist zum Sichtbarmachen der Zeichen des Ziffern/Zeichen-Satzes (15) und der beiden Buchstaben-Sätze (17, 19).

-/-

3. Vorrichtung nach Anspruch 1,

dadurch gekennzeichnet,

- dass die Eingabemittel gebildet sind durch zwei Tastensätze (44, 45) zur Eingabe der Zeichen eines Ziffern/Zeichen-Satzes (15, 21) und eines Buchstaben-Satzes (17, 19) und durch wenigstens eine Umschalttaste (49, 51) zum jederzeitigen Umschalten von dem einen Ziffern/Zeichen-Satz (15, 21) auf einen zweiten Ziffern/Zeichen-Satz (21, 15) und von dem einen Buchstaben-Satz (17, 19) auf einen zweiten Buchstaben-Satz (19, 17),

- dass die Logikeinheit (58) ausgebildet ist zur Bereitstellung von insgesamt sechs Befehlswörtern (84...89), von denen das erste (84) gebildet ist aus einem einzigen ersten Umschalt-Codewort (30), von denen das zweite (85) gebildet ist aus einem einzigen zweiten Umschalt-Codewort (31), und von denen das dritte bis sechste (86...89) gebildet sind als die vier unterscheidbaren Folgen von jeweils zwei Umschalt-Codewörtern (30 und/oder 31),

- und dass die Druck- und Anzeigeeinrichtung (77...80, 82) ausgerüstet ist zum Sichtbarmachen der Zeichen der beiden Ziffern/Zeichen-Sätze (15, 21) und der beiden Buchstaben-Sätze (17, 19).

0085936
Fall 624

| 11 | 14 | 16 | 18 | 20 | 22 |
|----|----|----|----|----|----|
| Codewörter | Ziffern/Zeichen | Grossbuchstaben | Kleinbuchstaben | Ziffern/Zeichen | |
| 1 1 0 0 0 | – | A | a | – | |
| 1 0 0 1 1 | ? | B | b | ? | |
| 0 1 1 1 0 | : | C | c | : | |
| 1 0 0 1 0 | ✠ | D | d | ✠ | |
| 1 0 0 0 0 | 3 —15 | E —17 | e —19 | 3 —21 | |
| 1 0 1 1 0 | ü | F | f | Ü | |
| 0 1 0 1 1 | ö | G | g | Ö | |
| 0 0 1 0 1 | ä | H | h | Ä | |
| 0 1 1 0 0 | 8 | I | i | 8 | |
| ⋮ | ⋮ | ⋮ | ⋮ | ⋮ | |
| 0 0 0 1 0 | Wagenrücklauf | | | | |
| 1 1 0 1 1 | Zeichen-Umschaltung | | | | |
| 1 1 1 1 1 | Buchstaben-Umschaltung | | | | |
| ⋮ | ⋮ | | | | |

Fig. 1

0085936
Fall 624

| Befehlswörter | Umschaltung von Zeichensatz | nach Zeichensatz |
|---|---|---|
| 30 — `1 1 0 1 1` 35 | 17 →<br>oder 19 → | 15<br>15 |
| 31 — `1 1 1 1 1` 36 | 15 →<br>oder 17 → | 17<br>19 |
| 30 `1 1 0 1 1` `1 1 1 1 1` 31 / 37 | 19 → | 17 |
| 31 `1 1 1 1 1` `1 1 1 1 1` 31 / 38 | 15 → | 19 |

Fig. 2

| Befehlswörter | Umschaltung von Zeichensatz | nach Zeichensatz |
|---|---|---|
| 30 — `1 1 0 1 1` 84 | 17 →<br>oder 19 →<br>oder 21 → | 21<br>21<br>15 |
| 31 — `1 1 1 1 1` 85 | 15 →<br>oder 17 →<br>oder 21 → | 17<br>19<br>17 |
| 30 `1 1 0 1 1` `1 1 0 1 1` 30 / 86 | 17 →<br>oder 19 →<br>oder 21 → | 15<br>15<br>15 |
| 31 `1 1 1 1 1` `1 1 0 1 1` 30 / 87 | 15 →<br>oder 17 →<br>oder 19 → | 21<br>21<br>21 |
| 30 `1 1 0 1 1` `1 1 1 1 1` 31 / 88 | 15 →<br>oder 19 →<br>oder 21 → | 17<br>17<br>17 |
| 31 `1 1 1 1 1` `1 1 1 1 1` 31 / 89 | 15 →<br>oder 17 →<br>oder 21 → | 19<br>19<br>19 |

Fig. 3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-C-2 640 848 (SIEMENS)<br>* Insgesamt *<br><br>--- | 1 | H 04 L 17/00 |
| A | DE-A-2 015 998 (COMPUTER TRANSCEIVER SYSTEM)<br>* Seite 2, Zeile 6 - Seite 5, Zeile 5; Tabelle 1 *<br><br>--- | 1 | |
| A | CHIP, Nr. 10, Oktober 1979, Seiten 48-50, Würzburg, DE.<br>W.R. ZAPP: "ASCII-Fabrik" * Insgesamt *<br><br>--- | 1 | |
| A | US-A-4 298 773 (DIAB)<br>* Spalte 7, Zeile 35 - Spalte 8, Zeile 30; Figur 8 *<br><br>--- | 1 | |

|  |  | RECHERCHIERTE SACHGEBIETE (Int. Cl. ³) |
|---|---|---|
| A | DE-C- 903 587 (SIEMENS & HALSKE)<br>* Seite 3, Zeile 100 - Seite 4, Zeile 32; Figuren 2-4 *<br><br>-----    1 | H 04 L 13/00<br>H 04 L 17/00<br>H 03 K 13/24 |

Der vorliegende Recherchenbericht wurde für alle Patentansprüche erstellt.

| Recherchenort<br>DEN HAAG | Abschlußdatum der Recherche<br>16-05-1983 | Prüfer<br>WANZEELE R.J. |
|---|---|---|

EPA Form 1503 03 82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument